# EUROPEAN PATENT APPLICATION

(11) **EP 4 510 701 A1**
(43) Date of publication of application: **19.02.2025**
(21) Application number: 23787635.4
(22) Date of filing: 10.04.2023
(51) Int. Cl.: H04W 36/00

(54) **CELL SWITCHING METHOD, CELL SWITCHING CONFIGURATION METHOD AND APPARATUS, TERMINAL, AND NETWORK SIDE DEVICE**

(30) Priority: 12.04.2022 CN 202210384060
(71) Applicant: Vivo Mobile Communication Co., Ltd., Dongguan, Guangdong 523863 (CN)
(72) Inventor: WANG, Yangyang, Dongguan, Guangdong 523863 (CN); WANG, Chenxi, Dongguan, Guangdong 523863 (CN); BAO, Wei, Dongguan, Guangdong 523863 (CN)
(74) Representative: Conti, Marco
(86) International application number: PCT/CN2023/087282
(87) International publication number: WO 2023/197991

(57) **Abstract**

This application discloses a cell handover method and apparatus, a cell handover configuration method and apparatus, a terminal, and a network side device, belonging to the technical field of communications. The cell handover method in an embodiment of this application includes: in a case that a layer 1 measurement result of a first target cell satisfies a first handover condition, performing, by a terminal, a first handover to the first target cell, where the first target cell is a candidate cell.

## Description

### CROSS-REFERENCE TO RELATED APPLICATIONS

This application claims priority to Chinese Patent Application No. 202210384060.2 filed on April 12, 2022, which is incorporated herein by reference in its entirety.

### TECHNICAL FIELD

This application belongs to the technical field of communications, and particularly relates to a cell handover method and apparatus, a cell handover configuration method and apparatus, a terminal, and a network side device.

### BACKGROUND

At present, a terminal usually performs cell handover based on a layer 3 (Layer 3, L3) measurement result. The scheme of cell handover based on the layer 3 measurement result has the problem of large mobile delay. In order to reduce the mobile delay of cell handover, the industry has proposed a scheme of cell handover based on a layer 1 (Layer 1, L1) measurement result. In this scheme, a network side device uses L1 signaling or L2 signaling to indicate a terminal handover to an indicated candidate cell according to the layer 1 measurement result reported by the terminal. However, in this case, the candidate cell indicated by the network side device may not be suitable for the terminal, which affects the performance of handover.

### SUMMARY

Embodiments of this application provide a cell handover method and apparatus, a cell handover configuration method and apparatus, a terminal, and a network side device, which can solve the problem that a candidate cell indicated by the network side device may not be suitable for the terminal and thus affect handover performance.

In a first aspect, there is provided a cell handover method, including:
in a case that a layer 1 measurement result of a first target cell satisfies a first handover condition, performing, by a terminal, a first handover to the first target cell, where the first target cell is a candidate cell.

In a second aspect, there is provided a cell handover apparatus. The apparatus includes:
a first handover module, configured to perform, in a case that a layer 1 measurement result of a first target cell satisfies a first handover condition, a first handover to the first target cell, where the first target cell is a candidate cell.

In a third aspect, there is provided a cell handover configuration method, including:
sending, by a network side device, first configuration information to a terminal, where the first configuration information includes layer 1 conditional reconfiguration information, the layer 1 conditional reconfiguration information is used for determining, by the terminal, a first target cell from candidate cells, and the first target cell is a target cell having a layer 1 measurement result satisfying a first handover condition.

In a fourth aspect, there is provided a cell handover configuration apparatus. The apparatus includes:
a first sending module, configured to send first configuration information to a terminal, where the first configuration information includes layer 1 conditional reconfiguration information, the layer 1 conditional reconfiguration information is used for determining, by the terminal, a first target cell from candidate cells, and the first target cell is a target cell having a layer 1 measurement result satisfying a first handover condition.

In a fifth aspect, there is provided a terminal. The terminal includes a processor and a memory. The memory stores programs or instructions executable on the processor. The programs or instructions, when executed by the processor, implement the steps of the method in the first aspect.

In a sixth aspect, there is provided a terminal, including a processor and a communication interface. The processor or the communication interface is configured to perform, by the terminal in a case that a layer 1 measurement result of a first target cell satisfies a first handover condition, a first handover to the first target cell, where the first target cell is a candidate cell.

In a seventh aspect, there is provided a network side device. The network side device includes a processor and a memory. The memory stores programs or instructions executable on the processor. The programs or instructions, when executed by the processor, implement the steps of the method in the third aspect.

In an eighth aspect, there is provided a network side device, including a processor and a communication interface. The communication interface is configured to send first configuration information to a terminal, where the first configuration information includes layer 1 conditional reconfiguration information, the layer 1 conditional reconfiguration information is used for determining, by the terminal, a first target cell from candidate cells, and the first target cell is a target cell having a layer 1 measurement result satisfying a first handover condition.

In a ninth aspect, there is provided a cell handover system, including: a terminal and a network side device, where the terminal may be configured to execute the steps of the cell handover method in the first aspect, and the network side device may be configured to execute the steps of the cell handover configuration method in the third aspect.

In a tenth aspect, there is provided a readable storage medium. The readable storage medium has programs or instructions stored thereon. The programs or instructions, when executed by a processor, implement the steps of the method in the first aspect or implement the steps of the method in the third aspect.

In an eleventh aspect, there is provided a chip. The chip includes a processor and a communication interface. The communication interface is coupled to the processor. The processor is configured to execute programs or instructions to implement the method in the first aspect or implement the method in the third aspect.

In a twelfth aspect, there is provided a computer program/program product. The computer program/program product is stored in a storage medium. The computer program/program product, when executed by at least one processor, implements the steps of the cell handover method in the first aspect, or the steps of the cell handover configuration method in the third aspect.

In the embodiment of this application, in a case that a layer 1 measurement result of a first target cell satisfies a first handover condition, a terminal performs a first handover to the first target cell, thereby realizing a cell handover scheme in which a conditional handover is performed based on the layer 1 measurement result. In the embodiment of this application, a target cell determined by the conditional handover can better meet the requirements of a terminal, and thus the handover performance can be improved.

### BRIEF DESCRIPTION OF THE DRAWINGS

FIG. 1 is a block diagram of a wireless communication system according to an embodiment of this application;
FIG. 2 is a flowchart of a cell handover method according to an embodiment of this application;
FIG. 3 is a structural diagram of a cell handover apparatus according to an embodiment of this application;
FIG. 4 is a flowchart of a cell handover configuration method according to an embodiment of this application;
FIG. 5 is a structural diagram of a cell handover configuration apparatus according to an embodiment of this application;
FIG. 6 is a structural diagram of a communication device according to an embodiment of this application;
FIG. 7 is a schematic diagram of a hardware structure of a terminal according to an embodiment of this application; and
FIG. 8 is a schematic diagram of a hardware structure of a network side device according to an embodiment of this application.

### DETAILED DESCRIPTION

The technical solutions in embodiments of this application are clearly described in the following with reference to the accompanying drawings in the embodiments of this application. Apparently, the described embodiments are merely some, rather than all of the embodiments of this application. All other embodiments obtained by a person of ordinary skill in the art based on the embodiments of this application fall within the protection scope of this application.

The terms "first" and "second" in the specification and claims of this application are used to distinguish similar objects, but are unnecessarily used to describe a specific sequence or order. It will be appreciated that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. Furthermore, "and/or" in the specification and claims represents at least one of connected objects, and the character "/" usually represents that previous and next associated objects form an "or" relationship.

It is to be pointed out that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually interchangeably used, and the technologies described may be applied to the systems and radio technologies mentioned above, and may also be applied to other systems and radio technologies. For an exemplary purpose, a new radio (New Radio, NR) system is described in the following description, and the term NR is used in most description below. However, these technologies may also be applied to other applications other than the NR system, for example, a 6^{th} generation (6^{th} Generation, 6G) communication system.

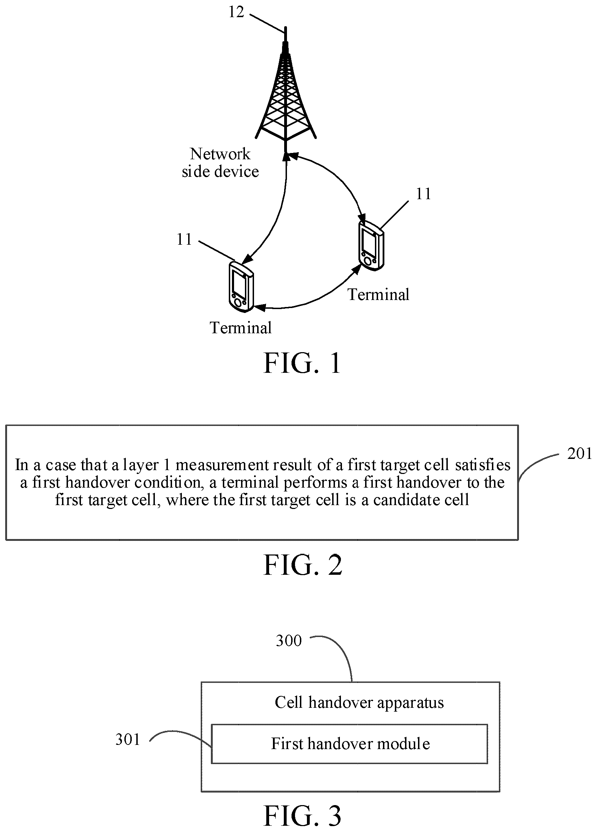

FIG. 1 shows a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a notebook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a washer or furniture), a game machine, a personal computer (personal computer, PC), a teller machine or a self-service machine. The wearable device includes: a smart watch, a smart bracelet, a smart earphone, smart eyeglasses, smart jewelry (a smart bangle, a smart chain bracelet, a smart ring, a smart necklace, a smart leglet, a smart anklet, and the like), a smart wristband, smart clothing, and the like. It is to be noted that the embodiments of this application do not limit the specific type of the terminal 11. The network side device 12 may include an access network device or a core network device, where the access network device may also be referred to as a radio access network device, a radio access network (Radio Access Network, RAN), a radio access network function or a radio access network unit. The access network device may include a base station, a wireless local area network (Wireless Local Area Network, WLAN) access point or a WiFi node, etc. The base station may be referred to as a NodeB, an evolution NodeB (eNB), an access point, a base transceiver station (Base Transceiver Station, BTS), a radio base station, a radio transceiver, a basic service set (Basic Service Set, BSS), an extended service set (Extended Service Set, ESS), a household NodeB, a household evolution NodeB, a transmitting receiving point (Transmitting Receiving Point, TRP) or some other appropriate terms in the field provided that the same technical effect is achieved. The base station is not limited to specific technical vocabularies. It is to be noted that only the base station in the NR system is taken as an example in the embodiments of this application, but the specific type of the base station is not limited.

A cell handover method, a cell handover apparatus, a cell handover configuration method, a cell handover configuration apparatus, a terminal, and a network side device provided in embodiments of this application will be described in detail below in conjunction with drawings through some embodiments and application scenes thereof.

FIG. 2 shows a flowchart of a cell handover method according to an embodiment of this application. As shown in FIG. 2, the cell handover method includes the following steps:
Step 201: In a case that a layer 1 measurement result of a first target cell satisfies a first handover condition, a terminal performs a first handover to the first target cell, where the first target cell is a candidate cell.

In this step, the terminal performs a conditional handover (Conditional Handover, CHO) based on the layer 1 measurement result. The conditional handover may be understood as a handover performed when a handover condition (which may also be referred to as one or more "trigger conditions") is satisfied. A candidate cell satisfying the handover condition may be referred to as a trigger cell.

When the layer 1 measurement results of a plurality of candidate cells satisfy a first handover condition, that is, when the terminal has a plurality of trigger cells, the terminal may select one of the trigger cells as a first target cell to perform a first handover.

Before step 201, the terminal may perform layer 1 measurement on the candidate cells. The terminal may determine whether there is a candidate cell satisfying the handover condition in the process of performing layer 1 measurement. When there is at least one candidate cell satisfying the handover condition, the terminal may perform the conditional handover without continuing the measurement. Besides, after performing layer 1 measurement on all the candidate cells, the terminal may determine one target cell from at least one candidate cell satisfying the handover condition to perform the conditional handover.

In the embodiment of this application, in a case that a layer 1 measurement result of a first target cell satisfies a first handover condition, a terminal performs a first handover to the first target cell, thereby realizing a cell handover scheme in which a conditional handover is performed based on the layer 1 measurement result. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can determine handover time by itself, a handover delay can be further reduced, and thus the handover performance can be further improved. The embodiment of this application can better realize cell handover and can at least satisfy a general cell handover scene.

In some embodiments, before the performing, by a terminal, a first handover to the first target cell, the method further includes:
receiving, by the terminal, first configuration information sent by a network side device, where the first configuration information includes layer 1 conditional reconfiguration information, the layer 1 conditional reconfiguration information includes N candidate cell configuration information, the N candidate cell configuration information includes configuration information of N candidate cells or configuration information of N candidate reference signals, and each candidate reference signal is associated with a candidate cell different from a physical cell identifier (Physical Cell Identifier, PCI) of a current serving cell or different from a frequency point of the current serving cell, N being an integer greater than or equal to 1.

The layer 1 conditional reconfiguration information may be understood as configuration information for indicating a handover condition for the conditional handover based on the layer 1 measurement result and configuration information necessary for the terminal to access the candidate cell. In other words, the terminal may perform the conditional handover based on the layer 1 measurement result according to the layer 1 conditional reconfiguration information.

The network side device may configure the handover condition for the conditional handover based on the layer 1 measurement result in different ways, which will be described below with two implementations.

As an implementation, the layer 1 conditional reconfiguration information includes a first handover condition identifier or the first handover condition. The first handover condition identifier is used for indicating the first handover condition, and the first handover condition is associated with the N candidate cells.

In this implementation, the network side device configures the same handover condition for all candidate cells. In other words, the layer 1 conditional reconfiguration information includes only one handover condition, namely a first handover condition. The first handover condition is associated with all the candidate cells. In this implementation, each of the candidate cell configuration information does not include the handover condition, but only includes the following necessary access information:
a reconfiguration identifier;
radio resource control (Radio Resource Control, RRC) configuration information of a candidate cell; and
a cell radio network temporary identifier (Cell Radio Network Temporary Identifier, C-RNTI) allocated to the terminal.

As another implementation, in addition to necessary access information, each of the candidate cell configuration information includes at least one of the following:
one or more handover condition identifiers, where the one or more handover condition identifiers are used for indicating one or more handover conditions;
one or more handover conditions.

In this implementation, the network side device configures different handover conditions for different candidate cells, and configures one or more trigger conditions for each candidate cell.

The above implementation provides a scheme in which the network side device configures the handover condition in the first configuration information, and the network side device may configure the handover condition in other configuration information. For example, the handover condition may be configured in second configuration information or other configuration information below.

In some embodiments, the first handover condition includes any one of the following:
M first enter conditions, where M is an integer greater than or equal to 1;
a trigger time length; and
P first leave conditions, where P is an integer greater than or equal to 1.

For example, the first handover condition includes M first enter conditions, or the first handover condition includes M first enter conditions and a trigger time length, or the first handover condition includes M first enter conditions and P first leave conditions, or the first handover condition includes M first enter conditions, a trigger time length, and P first leave conditions.

Optionally, the first enter condition includes at least one of the following:
layer 1 measurement results of all or part of reference signals (RS) associated with a candidate cell are higher than a layer 1 measurement result of an RS associated with a serving cell;
layer 1 measurement results of all or part of RSs associated with a candidate cell are higher than a first threshold, and layer 1 measurement results of all or part of RSs associated with a serving cell are lower than a second threshold; and
layer 1 measurement results of all or part of RSs associated with a candidate cell are higher than a third threshold;
   and/or,
the first leave condition includes at least one of the following:
   layer 1 measurement results of all or part of RSs associated with a candidate cell are lower than a layer 1 measurement result of an RS associated with a serving cell;
   layer 1 measurement results of all or part of RSs associated with a candidate cell are lower than the first threshold, and layer 1 measurement results of all or part of RSs associated with a serving cell are higher than the second threshold; and
   layer 1 measurement results of all or part RSs associated with a candidate cell are lower than the third threshold,

The first threshold, the second threshold and the third threshold are agreed in a protocol, pre-configured, or configured by a network side device.

Optionally, the case that the layer 1 measurement result of the first target cell satisfies the first handover condition includes at least one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

For example, if all layer 1 measurements or layer 1 measurement results of the terminal satisfy the first enter condition for a candidate cell associated with the first enter condition within a trigger time length, it may be considered that the first handover condition for the candidate cell is satisfied. Similarly, when any one of the first leave conditions for a candidate cell is always satisfied within a trigger time length, it may be considered that the first handover condition for the candidate cell is not satisfied. Alternatively, if the trigger time length is not configured, all layer 1 measurements or layer 1 measurement results of the terminal satisfy the first enter condition for a candidate cell associated with the first enter condition, it may be considered that the first handover condition for the candidate cell is satisfied. Similarly, once any one of the first leave conditions for a candidate cell is satisfied, it may be considered that the first handover condition is not satisfied for the candidate cell.

Optionally, the case that the layer 1 measurement result of the first target cell satisfies each first enter condition among the M first enter conditions includes:
a difference of time at which the layer 1 measurement result of the first target cell satisfies M first enter conditions is less than a first threshold, where the first threshold is configured by the network side device or agreed in a protocol or pre-configured.

When all handover conditions associated with a candidate cell are satisfied, it is considered that the candidate cell satisfies the conditions. The terminal may consider the candidate cell as a trigger cell, take the trigger cell as a target cell, and perform a cell handover to the target cell. If the trigger time length is not configured and a candidate cell corresponds to a plurality of handover conditions, the terminal may consider the candidate cell as a trigger cell when a difference of time at which all handover conditions associated with the candidate cell are satisfied is less than a first threshold.

The first threshold may be in milliseconds (ms), slots (slots), symbols (symbols), sub-frames (sub-frames), frames (frames), or the like.

In some embodiments, before the performing, by a terminal, a first handover to the first target cell, the method further includes:
receiving, by the terminal, second configuration information sent by the network side device, where the second configuration information includes layer 1 measurement configuration information, and the layer 1 measurement configuration information includes measurement configuration information of N candidate cells; and
performing, by the terminal, layer 1 measurement on the candidate cells based on the second configuration information.

The second configuration information and the first configuration information may be sent simultaneously or successively. Specifically, the second configuration information is sent ahead of the first configuration information. The related contents of the second configuration information will be described in detail below.

The layer 1 measurement configuration information may be understood as configuration information for indicating that layer 1 measurement is performed on N candidate cells. In other words, the terminal may perform layer 1 measurement on the candidate cells based on the layer 1 measurement configuration information in the second configuration information.

As an example, the layer 1 measurement configuration information includes measurement configuration information of a serving cell and one or more candidate cells. The candidate cell may be understood as an applicable cell. The applicable cell may be understood as a cell corresponding to a PCI included in the layer 1 conditional reconfiguration information received by the terminal, or a cell corresponding to a PCI associated with a transmission configuration indicator (Transmission Configuration Indicator, TCI) state (i.e., a TCI state) of a reference signal included in the layer 1 conditional reconfiguration information received by the terminal.

As an example, the layer 1 measurement configuration information may include at least one of the following:
a layer 1 measurement configuration information identifier;
measurement gap (gap) configuration information; and
a configuration information list of reference signals.

As an example, the configuration information list of reference signals may include configuration information of a serving cell and reference signals associated with one or more candidate cells, and may include at least one of the following:
a list of reference signal identifiers;
a list of cell identifiers or cell indexes, where optionally, the list of cell identifiers or cell indexes may be a cell PCI or may be associated with the cell PCI;
configuration information of SS/PBCH block measurement timing configuration (SS/PBCH block Measurement Timing Configuration, SMTC); and
frequency domain resource information of a reference signal, including a frequency point and a subcarrier spacing of the reference signal, and optionally including a bandwidth part (Bandwidth Part, BWP) identifier, a frequency band starting point, and a frequency band length for monitoring the reference signal.

Furthermore, if the configuration information of the SMTC and/or the frequency domain resource information of the reference signal may be associated through the reference signal identifiers, the cell identifiers or the cell indexes, the configuration information of the SMTC and/or the frequency domain resource information of the reference signal are not required to be configured in the layer 1 measurement configuration information.

Optionally, the second configuration information further includes layer 1 reporting configuration information. The layer 1 reporting configuration information includes a layer 1 reporting configuration type. The layer 1 reporting configuration type includes layer 1 measurement event reporting configuration information.

After the performing, by the terminal, layer 1 measurement on the candidate cells based on the second configuration information, the method further includes:
in a case that the layer 1 reporting configuration type is detected to be satisfied, reporting, by the terminal, a layer 1 measurement result of the candidate cell to the network side device.

As an example, the layer 1 reporting configuration information includes at least one of a layer 1 reporting identifier, a layer 1 reporting configuration type, and a reporting quantity configuration.

Further, the layer 1 reporting configuration type may include at least one of event-triggered reporting configuration information, periodic reporting configuration information, semi-persistent reporting configuration information, and aperiodic reporting configuration information.

The reporting quantity configuration may include at least one of a layer 1 measurement result (e.g., a layer 1 reference signal received power (Layer 1 Reference Signal Received Power, L1-RSRP), a layer 1 reference signal received quality (Layer 1 Reference Signal Received Quality, L1-RSRQ), a layer 1 signal-to-noise and interference ratio (Layer 1 Signal-to-noise and interference ratio, L1-SINR)), a measurement resource identifier (e.g., a Channel State Information Reference Signal (CSI-RS) resource indicator ((CSI-RS Resource Indicator, CRI), a synchronization signal block resource indicator (SSB-RI), a sounding reference signal resource indicator (SRS-RI)), a cell identifier (e.g., an indication of PCI or neighbor cell configuration information), and frequency-related information (this information is only for the case of inter-frequency measurements).

The event-triggered reporting configuration information may include one or more trigger events, where each trigger event may include at least one of a threshold of event trigger, a length of an event trigger timer, a hysteresis value corresponding to an event, a measurement offset value, an indication that an event leave condition is satisfied to trigger reporting, a maximum value of an event trigger counter, and a time trigger reporting interval.

The periodic reporting configuration information may include the following information: reporting periodicity and offset, and resource information associated with a physical uplink control channel (PUCCH). The semi-persistent reporting configuration information may include the following information: reporting periodicity and offset, resource information associated with a PUCCH, reporting slot configuration, reporting slot offset configuration, and resource information associated with a physical uplink shared channel (PUSCH). The aperiodic reporting configuration information may include reporting slot offset information.

As an example, when the layer 1 reporting configuration type includes event-triggered reporting configuration information, the terminal may perform layer 1 measurement according to the layer 1 measurement configuration information, and report the layer 1 measurement result based on the event trigger. Specifically, when the layer 1 measurement result satisfies a first condition of the event, the reporting is triggered by a physical layer. The first condition may include at least one of the following:
layer 1 measurement results of all or part of RSs in a first measurement resource set are higher than a layer 1 measurement result of an RS in a second measurement resource set;
layer 1 measurement results of all or part of RSs in the first measurement resource set are higher than a first threshold, and layer 1 measurement results of all or part of RSs in the second measurement resource set are lower than a second threshold; and
layer 1 measurement results of all or part of RSs in the second measurement resource set are lower than a third threshold.

Further, the first measurement resource set and the second measurement resource set may be determined by the terminal dividing measurement resources configured by the network side device according to the second configuration information. Here, the terminal determines the first measurement resource set and the second measurement resource set according to the second configuration information which includes at least one of the following:
events, where the division of the first measurement resource set and the second measurement resource set is different for different events, for example, if the event is defined as that the beam quality of a neighbor cell is better than that of a current serving cell, a first RS is an RS of the neighbor cell, and a second RS is an RS of the current serving cell;
all or part of TCI states currently activated by a network, where the first RS is a quasi co-location (Quasi co-location, QCL) resource RS (i.e., a QCL resource RS including at least a QCL Type-D RS) corresponding to all or part of the TCI states currently activated by the network among all the measurement resources configured by the network side device, and the second RS is a QCL resource RS (including at least a QCL Type-D RS) corresponding to all or part of the TCI states currently activated by the network;
a TCI state of control resource set (Control resource set, CORESET) #0, where the first RS is a QCL resource RS (including at least a QCL Type-D RS) corresponding to the TCI state of CORESET #0 among all the measurement resources configured by the network side device, and the second RS is a QCL resource RS (including at least a QCL Type-D RS) corresponding to the TCI state of CORESET #0; and
a TCI state of a non-UE-dedicated (Non-UE-dedicated) CORESET.

Optionally, the second configuration information further includes layer 1 measurement identifier configuration information, and one layer 1 measurement identifier configuration information may associate one layer 1 measurement configuration information and one layer 1 reporting configuration information. As an example, one layer 1 measurement identifier configuration information may include a layer 1 measurement identifier, a layer 1 measurement configuration information identifier and a layer 1 reporting identifier.

The above is an example content associated with the second configuration information. The network side device sends the second configuration information, whereby the terminal can perform layer 1 measurement on the candidate cells based on the second configuration information. Optionally, the layer 1 measurement result of the candidate cell is also reported based on the second configuration information.

In a specific example, before performing the first handover to the first target cell, the terminal may first perform layer 1 measurement on the candidate cells based on the second configuration information sent by the network side device. Then, based on the first configuration information sent by the network side device, the terminal determines whether the layer 1 measurement result of the candidate cells satisfies a first handover condition, takes candidate cells satisfying the first handover condition as trigger cells, determines a first target cell from the trigger cells, and performs the first handover to the first target cell.

In the embodiment of this application, the first handover of the terminal to the first target cell may be a first cell handover of the terminal. In other words, when the terminal performs the first cell handover, the cell handover scheme of performing conditional handover based on the layer 1 measurement result provided in the embodiment of this application may be adopted. Furthermore, the first handover of the terminal to the first target cell may be a non-first cell handover of the terminal. In other words, after the cell handover fails, the terminal may recover the cell handover by using the cell handover scheme of performing conditional handover based on the layer 1 measurement result provided in the embodiment of this application. For the latter, there are the following two possible cases: In the first case, after the terminal does not perform conditional handover based on the layer 1 measurement result, the terminal may recover the cell handover by using the cell handover scheme of performing conditional handover based on the layer 1 measurement result provided in the embodiment of this application. In the second case, after the terminal does not perform unconditional handover, the terminal may recover the cell handover by using the cell handover scheme of performing conditional handover based on the layer 1 measurement result provided in the embodiment of this application. The first case where the terminal repeatedly performs conditional handover based on the layer 1 measurement result is easy to understand. To avoid repetition, details are not described herein again. Hereinafter, the second possible case will be described as follows.

In some embodiments, before the performing, by a terminal, a first handover to the first target cell, the method further includes:
performing, by the terminal, a second handover to a second target cell, where the second target cell is a target handover cell indicated by the network side device.

The performing, by a terminal, a first handover to the first target cell in a case that a layer 1 measurement result of a first target cell satisfies a first handover condition includes:
performing, by the terminal, the first handover to the first target cell in a case that the second handover does not satisfy a first handover success condition and the layer 1 measurement result of the first target cell satisfies the first handover condition.

Since the second target cell is a target handover cell indicated by the network side device, the second handover belongs to an unconditional handover.

Further, the second target cell is a candidate cell indicated by the network side device based on the layer 1 measurement result.

In a specific example, before performing the second handover to the second target cell, the terminal may first perform beam measurement of the serving cell and the candidate cell based on the third configuration information sent by the network side device, and report the layer 1 measurement result to the serving cell. Then, when the network side device of the serving cell decides to allow the terminal to perform handover according to the layer 1 measurement result, L1 signaling or L2 signaling may be sent to the terminal to indicate a beam or cell of handover by the terminal. The L1 signaling or the L2 signaling may include at least one of a source cell identifier and a TCI state of an associated candidate cell. Then, the terminal may determine the second target cell according to the L1 signaling or the L2 signaling, and perform the second handover to the second target cell. When the second handover satisfies the first handover success condition, it is considered that the second handover is successful, and the cell handover process ends. When the second handover does not satisfy the first handover success condition, it is considered that the second handover fails. Then, the terminal may select a candidate cell having a layer 1 measurement result satisfying the first handover condition as the first target cell according to the layer 1 measurement results of other candidate cells (when a plurality of candidate cells satisfy the first handover condition, the terminal may select one of the candidate cells as the first target cell, for example, random selection or implementation based on the terminal), and perform the first handover to the first target cell. Here, the PCI of the first target cell may be a PCI corresponding to a TCI associated with a beam satisfying the first handover condition. Here, the selecting, by the terminal, a candidate cell having a layer 1 measurement result satisfying the first handover condition as the first target cell according to the layer 1 measurement results of other candidate cells may include: determining the first target cell by using the stored layer 1 measurement results of the candidate cells or re-performing layer 1 measurement on the candidate cells, taking candidate cells satisfying the first handover condition as trigger cells, and selecting the first target cell from the trigger cells.

In this specific example, at least a part of the content of the third configuration information may be the same as at least a part of the content of the second configuration information described above. The specific implementation of the third configuration information may be found from the related content of the second configuration information. To avoid repetition, details are not described herein again.

Further, the first handover success condition includes at least one of the following:
the terminal successfully sends a channel state information (Channel State Information, CSI) feedback to the second target cell;
the terminal receives an uplink schedule of the second target cell and successfully completes an uplink transmission;
the terminal completes a random access in the second target cell before a fifth timer expires, where the fifth timer is configured by the second target cell or agreed in a protocol;
in a case that the terminal is configured to skip the random access, the terminal receives a physical downlink control channel (PDCCH) scrambled by a C-RNTI allocated by the second target cell; and
the terminal sends an acknowledgement (ACK) feedback for the L1 signaling or the L2 signaling to a source cell.

The above is a related process in which after the terminal does not perform unconditional handover, the terminal recovers the cell handover by using the cell handover scheme of performing conditional handover based on the layer 1 measurement result.

In the embodiment of this application, after the terminal performs the first handover to the first target cell, the handover may fail. In this case, as an implementation, the terminal may continue to perform cell selection or cell reselection, or perform RRC reestablishment. As another implementation, the terminal may continue to recover the conditional handover based on the layer 1 measurement result. Different implementations will be described in detail below respectively.

As an implementation, after the performing, by a terminal, a first handover to the first target cell, the method further includes:
performing, by the terminal, cell selection or cell reselection or RRC reestablishment in a case that the first handover does not satisfy a second handover success condition; and
in a case that a third target cell selected by the terminal is a candidate cell, performing, by the terminal, a third handover to the third target cell.

In this implementation, the third handover may be understood as a handover recovery process.

As another implementation, after the performing, by a terminal, a first handover to the first target cell, the method further includes:
determining, by the terminal, a trigger cell based on a layer 1 measurement result of a candidate cell other than the first target cell in a case that the first handover does not satisfy a second handover success condition, where the trigger cell is a candidate cell having a layer 1 measurement result satisfying the first handover condition;
selecting a fourth target cell from the trigger cell; and
performing, by the terminal, a fourth handover to the fourth target cell.

The second handover success condition may include at least one of the following:
the terminal successfully sends a CSI feedback to the first target cell;
the terminal receives an uplink schedule of the first target cell and successfully completes an uplink transmission;
the terminal completes a random access in the first target cell before a second timer expires, where the second timer is configured by the first target cell or agreed in a protocol; and
in a case that the terminal is configured to skip the random access, the terminal receives a PDCCH scrambled by a C-RNTI allocated by the first target cell.

Further, time to turn on the second timer includes at least one of the following:
time at which the terminal receives first configuration information, where the first configuration information includes the second timer;
time at which the terminal starts to evaluate the handover condition;
time at which the terminal applies RRC configuration information of the first target cell; and
time at which the terminal starts to perform the random access to the first target cell.

The case that the second handover success condition is not satisfied may include at least one of the following:
the terminal does not complete a random access in the first target cell in a case that a second timer expires,
the number of failures in the random access in the first target cell by the terminal being greater than a second preset value;
in a case that the terminal is configured to skip the random access and a third timer expires, the terminal does not receive a PDCCH scrambled by a C-RNTI allocated by the first target cell, the third timer being configured by the first target cell or agreed in a protocol; and
in a case that a fourth timer expires, the terminal does not receive an uplink schedule sent by the first target cell, the fourth timer being configured by the first target cell or agreed in a protocol.

Further, time to turn on at least one of the third timer and the fourth timer is time at which the terminal applies RRC configuration information of the first target cell.

For another implementation described above, further, the determining, by the terminal, a trigger cell based on a layer 1 measurement result of a candidate cell other than the first target cell in a case that the first handover does not satisfy a second handover success condition includes:
determining, by the terminal, a trigger cell based on failure information and a layer 1 measurement result of a candidate cell other than the first target cell.

The failure information is used for indicating a failure reason. In a case that the first handover does not satisfy the second handover success condition, the failure information is used for indicating that the failure reason is handover failure. The terminal may store failure information, and determine a trigger cell based on the failure information and a layer 1 measurement result of a candidate cell other than the first target cell.

Further, after the performing, by a terminal, a fourth handover to the fourth target cell, the method further includes:
performing, by the terminal, an RRC reestablishment procedure or a layer 1 measurement-based conditional handover in a case that the fourth handover does not satisfy the second handover condition.

Optionally, the performing, by the terminal, an RRC reestablishment procedure may include at least one of the following:
performing, by the terminal, the RRC reestablishment procedure in a case that the number of layer 1 measurement-based conditional handovers is greater than or equal to a first preset value;
performing, by the terminal, the RRC reestablishment procedure in a case that a first timer expires; and
performing, by the terminal, the RRC reestablishment procedure in a case that a first duration expires.

Optionally, the performing, by the terminal, a layer 1 measurement-based conditional handover may include at least one of the following:
performing, by the terminal, the layer 1 measurement-based conditional handover in a case that the number of layer 1 measurement-based conditional handovers is less than the first preset value;
performing, by the terminal, the layer 1 measurement-based conditional handover in a case that the first timer does not expire; and
performing, by the terminal, the layer 1 measurement-based conditional handover in a case that the first duration does not expire.

Further, before the performing, by the terminal, an RRC reestablishment procedure or a layer 1 measurement-based conditional handover, the method further includes:
receiving, by the terminal, first information sent by the network side device, where the first information includes at least one of the following:
number-of-handovers indication information, used for indicating the first preset value;
the first timer; and
duration indication information, used for indicating the first duration.

In a specific example, if the fourth handover fails again, the terminal may perform an RRC reestablishment procedure.

In another specific example, the terminal may receive first information sent by the network side device. The first information may include a positive integer S, and is used for indicating that the terminal cannot perform conditional handover after the number of conditional handovers reaches S. Alternatively, the first information is used for indicating that the terminal may continue to perform layer 1 measurement-based conditional handover after the first handover fails until the number of continuous failures reaches S, and then the conditional handover cannot be recovered. If the handover fails again and the number of failures is less than S or S-1, the terminal performs layer 1 measurement-based conditional handover. Otherwise, the terminal performs the RRC reestablishment procedure.

In another specific example, the terminal may receive first information sent by the network side device. The first information may include a first timer or duration indication information, and is used for indicating that the terminal may continue to perform layer 1 measurement-based conditional handover before the first timer expires or in the duration after the terminal starts handover for the first time. Alternatively, the first information is used for indicating that the terminal may continue to perform layer 1 measurement-based conditional handover after the first handover fails until the first timer expires or the duration is exceeded, and then the conditional handover cannot be recovered. If the handover fails again and the first timer or the duration does not expire, the terminal performs layer 1 measurement-based conditional handover. Otherwise, the terminal performs the RRC reestablishment procedure.

To sum up, in the embodiment of this application, both a cell handover scheme in which a conditional handover is performed based on a layer 1 measurement result and a recovery scheme after handover failure are proposed. Therefore, the embodiment of this application can be applied not only to a general cell handover scene, but also to a handover failure scene. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can autonomously determine handover time, a handover delay can be further reduced, and thus the handover performance can be further improved. The embodiment of this application can better realize cell handover and recovery after handover failure.

An executing main body of the cell handover method provided in the embodiment of this application may be a cell handover apparatus. In the embodiment of this application, a cell handover apparatus executing a cell handover method is taken as an example for illustrating the cell handover apparatus provided in the embodiment of this application.

FIG. 3 shows a structural diagram of a cell handover apparatus according to an embodiment of this application. As shown in FIG. 3, a cell handover apparatus 300 includes:
a first handover module 301, configured to perform, in a case that a layer 1 measurement result of a first target cell satisfies a first handover condition, a first handover to the first target cell, where the first target cell is a candidate cell.

In some embodiments, the cell handover apparatus 300 further includes:
a first receiving module, configured to receive first configuration information sent by a network side device, where the first configuration information includes layer 1 conditional reconfiguration information, the layer 1 conditional reconfiguration information includes N candidate cell configuration information, the N candidate cell configuration information includes configuration information of N candidate cells or configuration information of N candidate reference signals, and each candidate reference signal is associated with a candidate cell different from a physical cell identifier (PCI) of a current serving cell or different from a frequency point of the current serving cell, N being an integer greater than or equal to 1.

In some embodiments, the layer 1 conditional reconfiguration information includes a first handover condition identifier or the first handover condition. The first handover condition identifier is used for indicating the first handover condition, and the first handover condition is associated with the N candidate cells.

In some embodiments, each of the candidate cell configuration information includes at least one of the following:
a reconfiguration identifier;
radio resource control (RRC) configuration information of a candidate cell;
a cell radio network temporary identifier (C-RNTI) allocated for the cell handover apparatus;
one or more handover condition identifiers, where the one or more handover condition identifiers are used for indicating one or more handover conditions; and
one or more handover conditions.

In some embodiments, the first handover condition includes at least one of the following:
M first enter conditions, where M is an integer greater than or equal to 1;
a trigger time length; and
P first leave conditions, where P is an integer greater than or equal to 1.

In some embodiments, the first enter condition includes at least one of the following:
layer 1 measurement results of all or part of reference signals (RS) associated with a candidate cell are higher than a layer 1 measurement result of an RS associated with a serving cell;
layer 1 measurement results of all or part of RSs associated with a candidate cell are higher than a first threshold, and layer 1 measurement results of all or part of RSs associated with a serving cell are lower than a second threshold; and
layer 1 measurement results of all or part of RSs associated with a candidate cell are higher than a third threshold;
   and/or,
the first leave condition includes at least one of the following:
   layer 1 measurement results of all or part of RSs associated with a candidate cell are lower than a layer 1 measurement result of an RS associated with a serving cell;
   layer 1 measurement results of all or part of RSs associated with a candidate cell are lower than the first threshold, and layer 1 measurement results of all or part of RSs associated with a serving cell are higher than the second threshold; and
   layer 1 measurement results of all or part of RSs associated with a candidate cell are lower than the third threshold,
   At least one of the first threshold, the second threshold and the third threshold is agreed in a protocol, pre-configured, or configured by a network side device.

In some embodiments, the case that the layer 1 measurement result of the first target cell satisfies the first handover condition includes any one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

In some embodiments, the case that the layer 1 measurement result of the first target cell satisfies each first enter condition among the M first enter conditions includes:
a difference of time from the layer 1 measurement result of the first target cell satisfies the first enter condition within the M first enter conditions to satisfies all the M first enter conditions is less than a first threshold, where the first threshold is configured by the network side device or agreed in a protocol or pre-configured.

In some embodiments, the cell handover apparatus 300 further includes:
a second receiving module, configured to receive second configuration information sent by the network side device, where the second configuration information includes layer 1 measurement configuration information, and the layer 1 measurement configuration information includes measurement configuration information of N candidate cells; and
a measurement module, configured to perform layer 1 measurement on the candidate cells according to the second configuration information.

In some embodiments, the cell handover apparatus 300 further includes:
a second handover module, configured to perform a second handover to a second target cell, where the second target cell is a target handover cell indicated by the network side device.

The first handover module 301 is specifically configured to:
perform the first handover to the first target cell in a case that the second handover does not satisfy a first handover success condition and the layer 1 measurement result of the first target cell satisfies the first handover condition.

In some embodiments, the second target cell is a candidate cell indicated by the network side device based on the layer 1 measurement result.

In some embodiments, the cell handover apparatus 300 further includes:
a first execution module, configured to perform cell selection or cell reselection or RRC reestablishment in a case that the first handover does not satisfy a second handover success condition; and
a third handover module, configured to perform, in a case that a selected third target cell is a candidate cell, a third handover to the third target cell.

In some embodiments, the cell handover apparatus 300 further includes:
a determination module, configured to determine a trigger cell based on a layer 1 measurement result of a candidate cell other than the first target cell in a case that the first handover does not satisfy a second handover success condition, where the trigger cell is a cell having a layer 1 measurement result satisfying the first handover condition;
a selection module, configured to select a fourth target cell from the trigger cell; and
a fourth handover module, configured to perform a fourth handover to the fourth target cell.

In some embodiments, the cell handover apparatus 300 further includes:
a second execution module, configured to perform an RRC reestablishment procedure or a layer 1 measurement-based conditional handover in a case that the fourth handover does not satisfy the second handover condition.

In some embodiments, the performing an RRC reestablishment procedure includes at least one of the following:
performing the RRC reestablishment procedure in a case that the number of layer 1 measurement-based conditional handovers is greater than or equal to a first preset value;
performing the RRC reestablishment procedure in a case that a first timer expires; and
performing the RRC reestablishment procedure in a case that a first duration expires;
   and/or,
the performing a layer 1 measurement-based conditional handover includes at least one of the following:
   performing the layer 1 measurement-based conditional handover in a case that the number of layer 1 measurement-based conditional handovers is less than the first preset value;
   performing the layer 1 measurement-based conditional handover in a case that the first timer does not expire; and
   performing the layer 1 measurement-based conditional handover in a case that the first duration does not expire.

In some embodiments, the cell handover apparatus 300 further includes:
a second receiving module, configured to receive first information sent by the network side device, where the first information includes at least one of the following:
number-of-handovers indication information, used for indicating the first preset value;
the first timer; and
duration indication information, used for indicating the first duration.

In some embodiments, the second handover success condition includes at least one of the following:
the cell handover apparatus successfully sends a channel state information (CSI) feedback to the first target cell;
the cell handover apparatus receives an uplink schedule of the first target cell and successfully completes an uplink transmission;
the cell handover apparatus completes a random access in the first target cell before a second timer expires, where the second timer is configured by the first target cell or agreed in a protocol; and
in a case that the cell handover apparatus is configured to skip the random access, the cell handover apparatus receives a physical downlink control channel (PDCCH) scrambled by a C-RNTI allocated by the first target cell.

In some embodiments, the case that the second handover success condition is not satisfied includes at least one of the following:
the cell handover apparatus does not complete a random access in the first target cell in a case that a second timer expires,
the number of failures in the random access in the first target cell by the cell handover apparatus being greater than a second preset value;
in a case that the cell handover apparatus is configured to skip the random access and a third timer expires, the cell handover apparatus does not receive a PDCCH scrambled by a C-RNTI allocated by the first target cell, where the third timer is configured by the first target cell or agreed in a protocol; and
in a case that a fourth timer expires, the cell handover apparatus does not receive an uplink schedule sent by the first target cell, where the fourth timer is configured by the first target cell or agreed in a protocol.

In some embodiments, time to turn on the second timer includes at least one of the following:
time at which the cell handover apparatus receives first configuration information, where the first configuration information includes the second timer;
time at which the cell handover apparatus starts to evaluate the handover condition;
time at which the cell handover apparatus applies RRC configuration information of the first target cell; and
time at which the cell handover apparatus starts to perform the random access to the first target cell.

In some embodiments, time to turn on at least one of the third timer and the fourth timer is time at which the cell handover apparatus applies RRC configuration information of the first target cell.

To sum up, in the embodiment of this application, both a cell handover scheme in which a conditional handover is performed based on a layer 1 measurement result and a recovery scheme after handover failure are proposed. Therefore, the embodiment of this application can be applied not only to a general cell handover scene, but also to a handover failure scene. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can autonomously determine handover time, a handover delay can be further reduced, and thus the handover performance can be further improved. The embodiment of this application can better realize cell handover and recovery after handover failure.

The cell handover apparatus in the embodiment of this application may be either an electronic device, for example, an electronic device having an operating system, or a component in the electronic device, for example, an integrated circuit or a chip. The electronic device may be either a terminal or another device other than the terminal. As an example, the terminal may include, but not limited to, the type of the terminal 11 above, and the another device may be a server, a network attached storage (NAS) and the like, which are not specifically limited in the embodiment of this application.

The cell handover apparatus provided in the embodiment of this application can implement various processes implemented by the method embodiment shown in FIG. 2 and achieve the same technical effect. To avoid repetition, details are not described herein again.

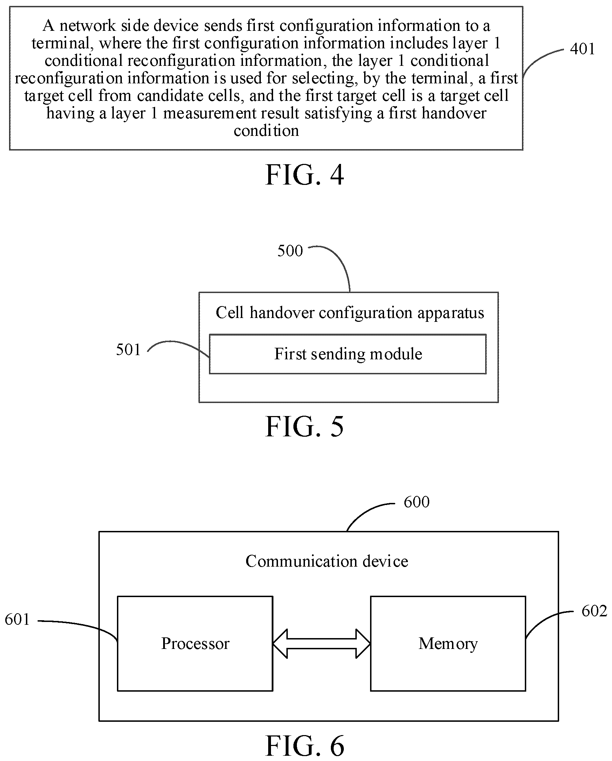

FIG. 4 shows a flowchart of a cell handover configuration method according to an embodiment of this application. As shown in FIG. 4, the cell handover configuration method includes the following steps:
Step 401: A network side device sends first configuration information to a terminal, where the first configuration information includes layer 1 conditional reconfiguration information, the layer 1 conditional reconfiguration information is used for determining, by the terminal, a first target cell from candidate cells, and the first target cell is a target cell having a layer 1 measurement result satisfying a first handover condition.

In some embodiments, the layer 1 conditional reconfiguration information includes N candidate cell configuration information. The N candidate cell configuration information includes configuration information of N candidate cells or configuration information of N candidate reference signals. Each candidate reference signal is associated with a candidate cell different from a physical cell identifier (PCI) of a current serving cell or different from a frequency point of the current serving cell, where N is an integer greater than or equal to 1.

In some embodiments, the layer 1 conditional reconfiguration information includes a first handover condition identifier or the first handover condition. The first handover condition identifier is used for indicating the first handover condition, and the first handover condition is associated with the N candidate cells.

In some embodiments, each of the candidate cell configuration information includes at least one of the following:
a reconfiguration identifier;
radio resource control (RRC) configuration information of a candidate cell;
a cell radio network temporary identifier (C-RNTI) allocated to the terminal;
one or more handover condition identifiers, where the one or more handover condition identifiers are used for indicating one or more handover conditions; and
one or more handover conditions.

In some embodiments, the first handover condition includes at least one of the following:
M first enter conditions, where M is an integer greater than or equal to 1;
a trigger time length; and
P first leave conditions, where P is an integer greater than or equal to 1.

In some embodiments, the first enter condition includes at least one of the following:
layer 1 measurement results of all or part of reference signals (RS) associated a candidate cells are higher than a layer 1 measurement result of an RS associated with a serving cell;
layer 1 measurement results of all or part of RSs associated with a candidate cell are higher than a first threshold, and layer 1 measurement results of all or part of RSs associated with a serving cell are lower than a second threshold; and
layer 1 measurement results of all or part of RSs associated with a candidate cell are higher than a third threshold;
   and/or,
the first leave condition includes at least one of the following:
   layer 1 measurement results of all or part of RSs associated with a candidate cell are lower than a layer 1 measurement result of an RS associated with a serving cell;
   layer 1 measurement results of all or part of RSs associated with a candidate cell are lower than the first threshold, and layer 1 measurement results of all or part of RSs associated with a serving cell are higher than the second threshold; and
   layer 1 measurement results of all or part of RSs associated with a candidate cell are lower than the third threshold,

At least one of the first threshold, the second threshold and the third threshold is agreed in a protocol, pre-configured, or configured by a network side device.

In some embodiments, the case that the layer 1 measurement result of the first target cell satisfies the first handover condition includes any one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

In some embodiments, the method further includes:
sending, by the network side device, second configuration information to the terminal, where the second configuration information includes layer 1 measurement configuration information, the layer 1 measurement configuration information includes measurement configuration information of N candidate cells, and the second configuration information is used for performing, by the terminal, layer 1 measurement on the candidate cells.

In some embodiments, the method further includes:
sending, by the network side device, first information to the terminal, where the first information includes at least one of the following:
number-of-handovers indication information, used for indicating that the terminal performs RRC reestablishment or the terminal is not allowed to perform a conditional handover in a case that a number of handover failures reaches a first preset value indicated by the number-of-handovers indication information;
a first timer, used for indicating that the terminal performs RRC reestablishment or the terminal is not allowed to perform a conditional handover in a case that the first timer expires; and
duration indication information, used for indicating that the terminal performs RRC reestablishment or the terminal is not allowed to perform a conditional handover in a case that a duration indicated by the duration indication information expires.

In the embodiment of this application, by sending configuration information to a terminal, the terminal can realize, according to layer 1 conditional reconfiguration information, a cell handover scheme in which a conditional handover is performed based on a layer 1 measurement result, and can further realize a recovery scheme after handover failure. Therefore, the embodiment of this application can be applied not only to a general cell handover scene, but also to a handover failure scene. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can autonomously determine handover time, a handover delay can be further reduced, and thus the handover performance can be further improved. The embodiment of this application can better realize cell handover and recovery after handover failure.

An executing main body of the cell handover configuration method provided in the embodiment of this application may be a cell handover configuration apparatus. In the embodiment of this application, a cell handover configuration apparatus executing a cell handover configuration method is taken as an example for illustrating the cell handover configuration apparatus provided in the embodiment of this application.

FIG. 5 shows a structural diagram of a cell handover configuration apparatus according to an embodiment of this application. As shown in FIG. 5, a cell handover configuration apparatus 500 includes:
a first sending module 501, configured to send first configuration information to a terminal, where the first configuration information includes layer 1 conditional reconfiguration information, the layer 1 conditional reconfiguration information is used for selecting, by the terminal, a first target cell from candidate cells, and the first target cell is a target cell having a layer 1 measurement result satisfying a first handover condition.

In some embodiments, the layer 1 conditional reconfiguration information includes N candidate cell configuration information. The N candidate cell configuration information includes configuration information of N candidate cells or configuration information of N candidate reference signals. Each candidate reference signal is associated with a candidate cell different from a physical cell identifier (PCI) of a current serving cell or different from a frequency point of the current serving cell, where N is an integer greater than or equal to 1.

In some embodiments, the layer 1 conditional reconfiguration information includes a first handover condition identifier or the first handover condition. The first handover condition identifier is used for indicating the first handover condition, and the first handover condition is associated with the N candidate cells.

In some embodiments, each of the candidate cell configuration information includes at least one of the following:
a reconfiguration identifier;
radio resource control (RRC) configuration information of a candidate cell;
a cell radio network temporary identifier (C-RNTI) allocated to the terminal;
one or more handover condition identifiers, where the one or more handover condition identifiers are used for indicating one or more handover conditions; and
one or more handover conditions.

In some embodiments, the first handover condition includes at least one of the following:
M first enter conditions, where M is an integer greater than or equal to 1;
a trigger time length; and
P first leave conditions, where P is an integer greater than or equal to 1.

In some embodiments, the first enter condition includes at least one of the following:
layer 1 measurement results of reference all or part of signals (RS) associated with a candidate cell are higher than a layer 1 measurement result of an RS associated with a serving cell;
layer 1 measurement results of all or part of RSs associated with a candidate cell are higher than a first threshold, and layer 1 measurement results of all or part of RSs associated with a serving cell are lower than a second threshold; and
layer 1 measurement results of all or part of RSs associated with a candidate cell are higher than a third threshold;
   and/or,
the first leave condition includes at least one of the following:
   layer 1 measurement results of all or part of RSs associated with a candidate cell are lower than a layer 1 measurement result of an RS associated with a serving cell;
   layer 1 measurement results of all or part of RSs associated with a candidate cell are lower than the first threshold, and layer 1 measurement results of all or part of RSs associated with a serving cell are higher than the second threshold; and
   layer 1 measurement results of all or part of RSs associated with a candidate cell are lower than the third threshold,

At least one of the first threshold, the second threshold and the third threshold is agreed in a protocol, pre-configured, or configured by a network side device.

In some embodiments, the case that the layer 1 measurement result of the first target cell satisfies the first handover condition includes any one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

In some embodiments, the cell handover configuration apparatus 500 further includes:
a second sending module, configured to send second configuration information to the terminal, where the second configuration information includes layer 1 measurement configuration information, the layer 1 measurement configuration information includes measurement configuration information of N candidate cells, and the second configuration information is used for performing, by the terminal, layer 1 measurement on the candidate cells.

In some embodiments, the cell handover configuration apparatus 500 further includes:
a third sending module, configured to send first information to the terminal, where the first information includes at least one of the following:
number-of-handovers indication information, used for indicating that the terminal performs RRC reestablishment or the terminal is not allowed to perform a conditional handover in a case that a number of handover failures reaches a first preset value indicated by the number-of-handovers indication information;
a first timer, used for indicating that the terminal performs RRC reestablishment or the terminal is not allowed to perform a conditional handover in a case that the first timer expires; and
duration indication information, used for indicating that the terminal performs RRC reestablishment or the terminal is not allowed to perform a conditional handover in a case that a duration indicated by the duration indication information expires.

In the embodiment of this application, by sending configuration information to a terminal, the terminal can realize, according to layer 1 conditional reconfiguration information, a cell handover scheme in which a conditional handover is performed based on a layer 1 measurement result, and can further realize a recovery scheme after handover failure. Therefore, the embodiment of this application can be applied not only to a general cell handover scene, but also to a handover failure scene. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can autonomously determine handover time, a handover delay can be further reduced, and thus the handover performance can be further improved. Therefore, the embodiment of this application can better realize cell handover and recovery after handover failure.

The cell handover configuration apparatus in the embodiment of this application may be either an electronic device, for example, an electronic device having an operating system, or a component in the electronic device, for example, an integrated circuit or a chip. The electronic device may be either a network side device or another device other than the network side device. As an example, the network side device may include, but not limited to, the type of the network side device 12 above, which is not specifically limited in the embodiment of this application.

The cell handover configuration apparatus provided in the embodiment of this application can implement various processes implemented by the method embodiment shown in FIG. 4 and achieve the same technical effect. To avoid repetition, details are not described herein again.

Optionally, as shown in FIG. 6, an embodiment of this application further provide a communication device 600, including a processor 601 and a memory 602. The memory 602 stores programs or instructions executable on the processor 601. For example, when the communication device 600 is a terminal, the programs or instructions, when executed by the processor 601, implement each step of the cell handover method embodiment and can achieve the same technical effect. When the communication device 600 is a network side device, the programs or instructions, when executed by the processor 601, implement each step of the cell handover configuration method embodiment and can achieve the same technical effect. To avoid repetition, details are not described herein again.

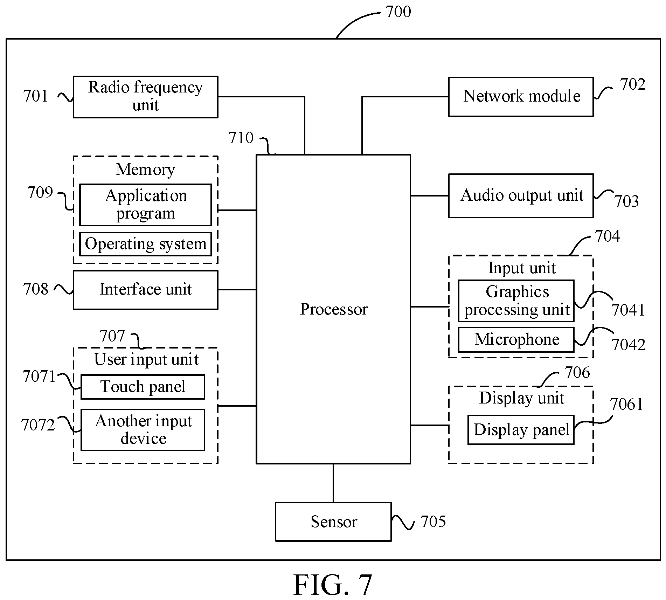

An embodiment of this application further provides a terminal, including a processor and a communication interface. The processor or the communication interface is configured to perform, by the terminal in a case that a layer 1 measurement result of a first target cell satisfies a first handover condition, a first handover to the first target cell, where the first target cell is a candidate cell. The terminal embodiment corresponds to the method embodiment at the terminal side. Each implementation process and implementation of the method embodiment are applicable to the terminal embodiment and can achieve the same technical effect. Specifically, FIG. 7 is a schematic diagram of a hardware structure of a terminal implementing an embodiment of this application.

The terminal 700 includes, but not limited to: at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (e.g., a battery) for supplying power to the components. The power supply may be logically connected to the processor 710 by a power management system, thereby implementing functions such as charging, discharging, and power consumption management by using the power management system. The terminal structure shown in FIG. 7 does not constitute a limitation on the terminal, and the terminal may include more or fewer components than shown, or combine some components, or have different component arrangements, which are not described here in detail.

It will be appreciated that in the embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 706 may include a display panel 7061. The display panel 7061 may be configured in a form of a liquid crystal display and an organic light-emitting diode. The user input unit 707 includes at least one of a touch panel 7071 and another input device 7072. The touch panel 7071 is also known as a touch screen. The touch panel 7071 may include two parts: a touch detection apparatus and a touch controller. The another input device 7072 may include, but not limited to, a physical keyboard, a functional key (such as a volume control key or a switch key), a track ball, a mouse, and a joystick, which are not described here in detail.

In the embodiment of this application, after the radio frequency unit 701 receives downlink data from a network side device, the downlink data may be sent to the processor 710 for processing. In addition, the radio frequency unit 701 may send uplink data to the network side device. Generally, the radio frequency unit 701 includes, but not limited to, an antenna, an amplifier, a transceiver, a coupler, a low noise amplifier, a duplexer, and the like.

The memory 709 may be configured to store software programs or instructions and various data. The memory 709 may mainly include a first storage area storing the programs or instructions and a second storage area storing the data. The first storage area may store an operating system, an application program or instruction required by at least one function (such as a sound playback function and an image display function), and the like. Furthermore, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory may be a random access memory (Random Access Memory, RAM), a static random access memory (Static RAM, SRAM) a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiment of this application includes, but not limited to, these memories and any other suitable types of memories.

The processor 710 may include one or more processing units. Optionally, the processor 710 integrates an application processor and a modem processor, where the application processor mainly processes operations involving an operating system, a user interface, an application program, and the like, and the modem processor mainly processes wireless communication signals, for example, a baseband processor. It will be appreciated that the modem processor may also not be integrated into the processor 710.

The radio frequency unit 701 or the processor 710 is configured to perform, by a terminal in a case that a layer 1 measurement result of a first target cell satisfies a first handover condition, a first handover to the first target cell, where the first target cell is a candidate cell.

In the embodiment of this application, in a case that a layer 1 measurement result of a first target cell satisfies a first handover condition, a terminal performs a first handover to the first target cell, thereby realizing a cell handover scheme in which a conditional handover is performed based on the layer 1 measurement result. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can autonomously determine handover time, a handover delay can be further reduced, and thus the handover performance can be further improved. Therefore, the embodiment of this application can better realize cell handover and can at least satisfy a general cell handover scene.

Optionally, the radio frequency unit 701 is further configured to:
receive first configuration information sent by a network side device, where the first configuration information includes layer 1 conditional reconfiguration information, the layer 1 conditional reconfiguration information includes N candidate cell configuration information, the N candidate cell configuration information includes configuration information of N candidate cells or configuration information of N candidate reference signals, and each candidate reference signal is associated with a candidate cell different from a physical cell identifier (PCI) of a current serving cell or different from a frequency point of the current serving cell, N being an integer greater than or equal to 1.

In some embodiments, the layer 1 conditional reconfiguration information includes a first handover condition identifier or the first handover condition. The first handover condition identifier is used for indicating the first handover condition, and the first handover condition is associated with the N candidate cells.

In some embodiments, each of the candidate cell configuration information includes at least one of the following:
a reconfiguration identifier;
radio resource control (RRC) configuration information of a candidate cell;
a cell radio network temporary identifier (C-RNTI) allocated for the cell handover apparatus;
one or more handover condition identifiers, where the one or more handover condition identifiers are used for indicating one or more handover conditions; and
one or more handover conditions.

In some embodiments, the first handover condition includes at least one of the following:
M first enter conditions, where M is an integer greater than or equal to 1;
a trigger time length; and
P first leave conditions, where P is an integer greater than or equal to 1.

In some embodiments, the first enter condition includes at least one of the following:
layer 1 measurement results of all or part of reference signals (RS) associated with a candidate cell are higher than a layer 1 measurement result of an RS associated with a serving cell;
layer 1 measurement results of all or part of RSs associated with candidate cells are higher than a first threshold, and layer 1 measurement results of all or part of RSs associated with a serving cell are lower than a second threshold; and
layer 1 measurement results of all or part of RSs associated with a candidate cell are higher than a third threshold;
   and/or,
the first leave condition includes at least one of the following:
   layer 1 measurement results of all or part of RSs associated with a candidate cell are lower than a layer 1 measurement result of an RS associated with a serving cell;
   layer 1 measurement results of all or part of RSs associated with a candidate cell are lower than the first threshold, and layer 1 measurement results of all or part of RSs associated with a serving cell are higher than the second threshold; and
   layer 1 measurement results of all or part of RSs associated with a candidate cells are lower than the third threshold,

At least one of the first threshold, the second threshold and the third threshold is agreed in a protocol, pre-configured, or configured by a network side device.

In some embodiments, the case that the layer 1 measurement result of the first target cell satisfies the first handover condition includes any one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

In some embodiments, the case that the layer 1 measurement result of the first target cell satisfies each first enter condition among the M first enter conditions includes:
a difference of time at which the layer 1 measurement result of the first target cell satisfies the M first enter conditions is less than a first threshold, where the first threshold is configured by the network side device or agreed in a protocol or pre-configured.

In some embodiments, the radio frequency unit 701 is further configured to:
receive second configuration information sent by the network side device, where the second configuration information includes layer 1 measurement configuration information, and the layer 1 measurement configuration information includes measurement configuration information of N candidate cells.

The processor 710 is further configured to:
perform layer 1 measurement on the candidate cells according to the second configuration information.

In some embodiments, the radio frequency unit 701 or the processor 710 is further configured to:
perform a second handover to a second target cell, where the second target cell is a target handover cell indicated by the network side device; and
perform the first handover to the first target cell in a case that the second handover does not satisfy a first handover success condition and the layer 1 measurement result of the first target cell satisfies the first handover condition.

In some embodiments, the second target cell is a candidate cell indicated by the network side device based on the layer 1 measurement result.

In some embodiments, the radio frequency unit 701 or the processor 710 is further configured to:
perform cell selection or cell reselection or RRC reestablishment in a case that the first handover does not satisfy a second handover success condition; and
perform, in a case that a selected third target cell is a candidate cell, a third handover to the third target cell.

In some embodiments, the radio frequency unit 701 or the processor 710 is further configured to:
determine a trigger cell based on a layer 1 measurement result of a candidate cell other than the first target cell in a case that the first handover does not satisfy a second handover success condition, where the trigger cell is a candidate cell having a layer 1 measurement result satisfying the first handover condition;
select a fourth target cell from the trigger cell; and
perform a fourth handover to the fourth target cell.

In some embodiments, the radio frequency unit 701 or the processor 710 is further configured to:
perform an RRC reestablishment procedure or a layer 1 measurement-based conditional handover in a case that the fourth handover does not satisfy the second handover condition.

In some embodiments, the performing an RRC reestablishment procedure includes at least one of the following:
performing the RRC reestablishment procedure in a case that the number of layer 1 measurement-based conditional handovers is greater than or equal to a first preset value;
performing the RRC reestablishment procedure in a case that a first timer expires; and
performing the RRC reestablishment procedure in a case that a first duration expires;
   and/or,
the performing a layer 1 measurement-based conditional handover includes at least one of the following:
   performing the layer 1 measurement-based conditional handover in a case that the number of layer 1 measurement-based conditional handovers is less than the first preset value;
   performing the layer 1 measurement-based conditional handover in a case that the first timer does not expire; and
   performing the layer 1 measurement-based conditional handover in a case that the first duration does not expire.

In some embodiments, the radio frequency unit 701 is further configured to:
receive first information sent by the network side device, where the first information includes at least one of the following:
number-of-handovers indication information, used for indicating the first preset value;
the first timer; and
duration indication information, used for indicating the first duration.

In some embodiments, the second handover success condition includes at least one of the following:
the terminal successfully sends a channel state information (CSI) feedback to the first target cell;
the terminal receives an uplink schedule of the first target cell and successfully completes an uplink transmission;
the terminal completes a random access in the first target cell before a second timer expires, the second timer being configured by the first target cell or agreed in a protocol; and
in a case that the terminal is configured to skip the random access, the terminal receives a physical downlink control channel (PDCCH) scrambled by a C-RNTI allocated by the first target cell.

In some embodiments, the case that the second handover success condition is not satisfied includes at least one of the following:
the terminal does not complete a random access in the first target cell in a case that a second timer expires,
the number of failures in the random access in the first target cell by the terminal being greater than a second preset value;
in a case that the terminal is configured to skip the random access and a third timer expires, the terminal does not receive a PDCCH scrambled by a C-RNTI allocated by the first target cell, the third timer being configured by the first target cell or agreed in a protocol; and
in a case that a fourth timer expires, the terminal does not receive an uplink schedule sent by the first target cell, the fourth timer being configured by the first target cell or agreed in a protocol.

In some embodiments, time to turn on the second timer includes at least one of the following:
time at which the terminal receives first configuration information, where the first configuration information includes the second timer;
time at which the terminal starts to evaluate the handover condition;
time at which the terminal applies RRC configuration information of the first target cell; and
time at which the terminal starts to perform the random access to the first target cell.

In some embodiments, time to turn on at least one of the third timer and the fourth timer is time at which the terminal applies RRC configuration information of the first target cell.

To sum up, in the embodiment of this application, both a cell handover scheme in which a conditional handover is performed based on a layer 1 measurement result and a recovery scheme after handover failure are proposed. Therefore, the embodiment of this application can be applied not only to a general cell handover scene, but also to a handover failure scene. In the embodiment of this application, a target cell determined by the conditional handover can better meet the requirements of a terminal, and thus the handover performance can be improved. Furthermore, the handover based on the layer 1 measurement result can reduce a mobile delay, and since the conditional handover terminal can determine handover time by itself, a handover delay can be further reduced, and thus the handover performance can be further improved. The embodiment of this application can better realize cell handover and recovery after handover failure.

An embodiment of this application further provides a network side device, including a processor and a communication interface. The communication interface is configured to send first configuration information to a terminal, where the first configuration information includes layer 1 conditional reconfiguration information, the layer 1 conditional reconfiguration information is used for selecting, by the terminal, a first target cell from candidate cells, and the first target cell is a target cell having a layer 1 measurement result satisfying a first handover condition. The network side device embodiment corresponds to the method embodiment at the network side device. Each implementation process and implementation of the method embodiment are applicable to the network side device embodiment and can achieve the same technical effect.

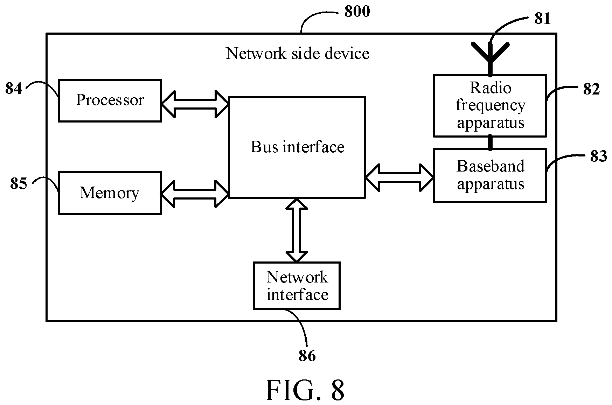

Specifically, an embodiment of this application further provides a network side device. As shown in FIG. 8, the network side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81 and sends the received information to the baseband apparatus 83 for processing. In a downlink direction, the baseband apparatus 83 processes information to be sent and sends the information to the radio frequency apparatus 82. The received information is processed by the radio frequency apparatus 82 and is then sent through the antenna 81.

The method performed by the network side device in the above embodiments may be implemented in the baseband apparatus 83. The baseband apparatus 83 includes a baseband processor.

The baseband apparatus 83 may, for example, include at least one baseband board. A plurality of chips are arranged on the baseband board. As shown in FIG. 8, one of the chips is, for example, the baseband processor connected to the memory 85 through a bus interface to call a program in the memory 85, so as to execute the network side device operation shown in the method embodiment.

The network side device may further include a network interface 86. The interface is, for example, a common public radio interface (common public radio interface, CPRI).

Specifically, the network side device 800 in the embodiment of the present invention further includes: instructions or programs stored in a memory 85 and executable on the processor 84. The processor 84 calls the instructions or programs in the memory 85 to execute the method executed by each module in FIG. 5, and achieves the same technical effect. To avoid repetition, details are not described here again.

An embodiment of this application further provides a readable storage medium. The readable storage medium has programs or instructions stored thereon. The programs or instructions, when executed by a processor, implement each process of the cell handover method embodiment or the cell handover configuration method embodiment and can achieve the same technical effect. To avoid repetition, details are not described here again.

The processor is a processor in the terminal in the above embodiments. The readable storage medium includes a computer-readable storage medium such as a read-only memory (ROM), a random access memory (RAM), a magnetic disk, or an optical disc.

An embodiment of this application additionally provides a chip. The chip includes a processor and a communication interface. The communication interface is coupled to the processor. The processor is configured to execute programs or instructions to implement each process of the cell handover method embodiment or the cell handover configuration method embodiment and can achieve the same technical effect. To avoid repetition, details are not described here again.

It will be appreciated that the chip mentioned in the embodiment of this application may also be referred to as a system on chip, a system chip, a system on a chip or a system-on-a-chip, etc.

An embodiment of this application additionally provides a computer program/program product. The computer program/program product is stored in a storage medium. The computer program/program product, when executed by at least one processor, implements each process of the cell handover method embodiment or the cell handover configuration method embodiment and can achieve the same technical effect. To avoid repetition, details are not described here again.

An embodiment of this application further provides a cell handover system, including: a terminal and a network side device, where the terminal may be configured to execute the steps of the cell handover method as described above, and the network side device may be configured to execute the steps of the cell handover configuration method as described above.

It is to be noted that the terms "include", "comprise", or any other variations thereof in this specification are intended to cover a non-exclusive inclusion, such that a process, method, article, or apparatus including a series of elements not only includes those elements, but also includes other elements that are not explicitly listed, or also includes elements inherent to such process, method, article, or apparatus. Without more limitations, elements defined by the sentence "including one" does not exclude that there are still other same elements in the processes, methods, objects, or apparatuses. Furthermore, it is to be pointed out that the scopes of the method and apparatus in the implementations of this application are not limited to executing functions according to the illustrated or discussed sequence, but may also include execute functions in a basically simultaneous way or in a reverse sequence based on the functions involved. For example, the described method may be executed according to a sequence different from the described sequence, and steps may further be added, omitted or combined. In addition, features described in some examples may also be combined in other examples.

According to the descriptions in the above implementations, a person skilled in the art may clearly learn that the method according to the above embodiments may be implemented by software plus a necessary hardware platform. Of course, it may also be implemented by hardware, but in many cases the former is better implementation. Based on such an understanding, the technical solutions of this application essentially, or the part contributing to the prior art, may be embodied in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the method described in each embodiment of this application.

The embodiments of this application have been described above with reference to the accompanying drawings. This application is, however, not limited to the specific implementations described above, and the specific implementations are merely exemplary rather than restrictive. A person of ordinary skill in the art may make various variations under the teaching of this application without departing from the spirit of this application and the protection scope of the claims, and such variations shall all fall within the protection scope of this application.

## Claims

1. A cell handover method, comprising:
in a case that a layer 1 measurement result of a first target cell satisfies a first handover condition, performing, by a terminal, a first handover to the first target cell, the first target cell being a candidate cell.

2. The method according to claim 1, wherein before the performing, by a terminal, a first handover to the first target cell, the method further comprises:
receiving, by the terminal, first configuration information sent by a network side device, the first configuration information comprising layer 1 conditional reconfiguration information, the layer 1 conditional reconfiguration information comprising N candidate cell configuration information, the N candidate cell configuration information comprising configuration information of N candidate cells or configuration information of N candidate reference signals, wherein each candidate reference signal is associated with a candidate cell different from a physical cell identifier (PCI) of a current serving cell or different from a frequency point of the current serving cell, N being an integer greater than or equal to 1.

3. The method according to claim 2, wherein the layer 1 conditional reconfiguration information comprises a first handover condition identifier or the first handover condition, the first handover condition identifier being used for indicating the first handover condition, and the first handover condition being associated with the N candidate cells.

4. The method according to claim 2, wherein each of the candidate cell configuration information comprises at least one of the following:
a reconfiguration identifier;
radio resource control (RRC) configuration information of a candidate cell;
a cell radio network temporary identifier (C-RNTI) allocated to the terminal;
one or more handover condition identifiers, the one or more handover condition identifiers being used for indicating one or more handover conditions; and
one or more handover conditions.

5. The method according to claim 1, wherein the first handover condition comprises at least one of the following:
M first enter conditions, M being an integer greater than or equal to 1;
a trigger time length; and
P first leave conditions, P being an integer greater than or equal to 1.

6. The method according to claim 5, wherein the first enter condition comprises at least one of the following:
layer 1 measurement results of all or part of reference signals (RS) associated with a candidate cell are higher than a layer 1 measurement result of an RS associated with a serving cell;
layer 1 measurement results of all or part of RSs associated with a candidate cell are higher than a first threshold, and layer 1 measurement results of all or part of RSs associated with a serving cell are lower than a second threshold; and
layer 1 measurement results of all or part of RSs associated with a candidate cell are higher than a third threshold;
and/or,
the first leave condition comprises at least one of the following:
layer 1 measurement results of all or part of RSs associated with a candidate cell are lower than a layer 1 measurement result of an RS associated with a serving cell;
layer 1 measurement results of all or part of RSs associated with a candidate cell are lower than the first threshold, and layer 1 measurement results of all or part of RSs associated with a serving cell are higher than the second threshold; and
layer 1 measurement results of all or part of RSs associated with a candidate cell are lower than the third threshold,
wherein at least one of the first threshold, the second threshold and the third threshold is configured by a network side device or agreed in a protocol or pre-configured.

7. The method according to claim 5, wherein the case that the layer 1 measurement result of the first target cell satisfies the first handover condition comprises any one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

8. The method according to claim 7, wherein the case that the layer 1 measurement result of the first target cell satisfies each first enter condition among the M first enter conditions comprises:
a difference of time at which the layer 1 measurement result of the first target cell satisfies the M first enter conditions is less than a first threshold, the first threshold being configured by a network side device or agreed in a protocol or pre-configured.

9. The method according to claim 2, wherein before the performing, by a terminal, a first handover to the first target cell, the method further comprises:
receiving, by the terminal, second configuration information sent by the network side device, the second configuration information comprising layer 1 measurement configuration information, the layer 1 measurement configuration information comprising measurement configuration information of N candidate cells; and
performing, by the terminal, layer 1 measurement on the candidate cell according to the second configuration information.

10. The method according to claim 1, wherein before the performing, by a terminal, a first handover to the first target cell, the method further comprises:
performing, by the terminal, a second handover to a second target cell, the second target cell being a target handover cell indicated by a network side device; and
the performing, by a terminal, a first handover to the first target cell in a case that a layer 1 measurement result of a first target cell satisfies a first handover condition comprises:
performing, by the terminal, the first handover to the first target cell in a case that the second handover does not satisfy a first handover success condition and the layer 1 measurement result of the first target cell satisfies the first handover condition.

11. The method according to claim 10, wherein the second target cell is a candidate cell indicated by the network side device based on the layer 1 measurement result.

12. The method according to claim 1, wherein after the performing, by a terminal, a first handover to the first target cell, the method further comprises:
performing, by the terminal, cell selection or cell reselection or RRC reestablishment in a case that the first handover does not satisfy a second handover success condition; and
in a case that a third target cell selected by the terminal is a candidate cell, performing, by the terminal, a third handover to the third target cell.

13. The method according to claim 1, wherein after the performing, by a terminal, a first handover to the first target cell, the method further comprises:
determining, by the terminal, a trigger cell based on a layer 1 measurement result of a candidate cell other than the first target cell in a case that the first handover does not satisfy a second handover success condition, the trigger cell being a candidate cell having a layer 1 measurement result satisfying the first handover condition;
selecting a fourth target cell from the trigger cell; and
performing, by the terminal, a fourth handover to the fourth target cell.

14. The method according to claim 13, wherein after the performing, by a terminal, a fourth handover to the fourth target cell, the method further comprises:
performing, by the terminal, an RRC reestablishment procedure or a layer 1 measurement-based conditional handover in a case that the fourth handover does not satisfy the second handover condition.

15. The method according to claim 12 or 14, wherein the performing, by the terminal, an RRC reestablishment procedure comprises at least one of the following:
performing, by the terminal, the RRC reestablishment procedure in a case that the number of layer 1 measurement-based conditional handovers is greater than or equal to a first preset value;
performing, by the terminal, the RRC reestablishment procedure in a case that a first timer expires; and
performing, by the terminal, the RRC reestablishment procedure in a case that a first duration expires;
and/or,
the performing, by the terminal, a layer 1 measurement-based conditional handover comprises at least one of the following:
performing, by the terminal, the layer 1 measurement-based conditional handover in a case that the number of layer 1 measurement-based conditional handovers is less than the first preset value;
performing, by the terminal, the layer 1 measurement-based conditional handover in a case that the first timer does not expire; and
performing, by the terminal, the layer 1 measurement-based conditional handover in a case that the first duration does not expire.

16. The method according to claim 15, wherein before the performing, by the terminal, an RRC reestablishment procedure or a layer 1 measurement-based conditional handover, the method further comprises:
receiving, by the terminal, first information sent by a network side device, the first information comprising at least one of the following:
number-of-handovers indication information, used for indicating the first preset value;
the first timer; and
duration indication information, used for indicating the first duration.

17. The method according to claim 13, wherein the second handover success condition comprises at least one of the following:
the terminal successfully sends a channel state information (CSI) feedback to the first target cell;
the terminal receives an uplink schedule of the first target cell and successfully completes an uplink transmission;
the terminal completes a random access in the first target cell before a second timer expires, the second timer being configured by the first target cell or agreed in a protocol; and
in a case that the terminal is configured to skip the random access, the terminal receives a physical downlink control channel (PDCCH) scrambled by a C-RNTI allocated by the first target cell.

18. The method according to claim 13, wherein the case that the second handover success condition is not satisfied comprises at least one of the following:
the terminal does not complete a random access in the first target cell in a case that a second timer expires,
the number of failures in the random access in the first target cell by the terminal being greater than a second preset value;
in a case that the terminal is configured to skip the random access and a third timer expires, the terminal does not receive a PDCCH scrambled by a C-RNTI allocated by the first target cell, the third timer being configured by the first target cell or agreed in a protocol; and
in a case that a fourth timer expires, the terminal does not receive an uplink schedule sent by the first target cell, the fourth timer being configured by the first target cell or agreed in a protocol.

19. The method according to claim 17 or 18, wherein time to turn on the second timer comprises at least one of the following:
time at which the terminal receives first configuration information, the first configuration information comprising the second timer;
time at which the terminal starts to evaluate the handover condition;
time at which the terminal applies RRC configuration information of the first target cell; and
time at which the terminal starts to perform the random access to the first target cell.

20. The method according to claim 18, wherein time to turn on at least one of the third timer and the fourth timer is time at which the terminal applies RRC configuration information of the first target cell.

21. A cell handover configuration method, comprising:
sending, by a network side device, first configuration information to a terminal, the first configuration information comprising layer 1 conditional reconfiguration information, the layer 1 conditional reconfiguration information being used for determining, by the terminal, a first target cell from candidate cells, and the first target cell being a target cell having a layer 1 measurement result satisfying a first handover condition.

22. The method according to claim 21, wherein the layer 1 conditional reconfiguration information comprises N candidate cell configuration information, the N candidate cell configuration information comprising configuration information of N candidate cells or configuration information of N candidate reference signals, wherein each candidate reference signal is associated with a candidate cell different from a physical cell identifier (PCI) of a current serving cell or different from a frequency point of the current serving cell, N being an integer greater than or equal to 1.

23. The method according to claim 22, wherein the layer 1 conditional reconfiguration information comprises a first handover condition identifier or the first handover condition, the first handover condition identifier being used for indicating the first handover condition, and the first handover condition being associated with the N candidate cells.

24. The method according to claim 23, wherein each of the candidate cell configuration information comprises at least one of the following:
a reconfiguration identifier;
radio resource control (RRC) configuration information of a candidate cell;
a cell radio network temporary identifier (C-RNTI) allocated to the terminal;
one or more handover condition identifiers, the one or more handover condition identifiers being used for indicating one or more handover conditions; and
one or more handover conditions.

25. The method according to claim 21, wherein the first handover condition comprises at least one of the following:
M first enter conditions, M being an integer greater than or equal to 1;
a trigger time length; and
P first leave conditions, P being an integer greater than or equal to 1.

26. The method according to claim 25, wherein the case that the layer 1 measurement result of the first target cell satisfies the first handover condition comprises at least one of the following:
the layer 1 measurement result of the first target cell satisfies each first enter condition among the M first enter conditions;
the layer 1 measurement result of the first target cell satisfies each first enter condition among the M first enter conditions within a trigger time length;
the layer 1 measurement result of the first target cell satisfies each first enter condition among the M first enter conditions and does not satisfy any one first leave condition among the P first leave conditions; and
the layer 1 measurement result of the first target cell satisfies each first enter condition among the M first enter conditions and does not satisfy any one first leave condition among the P first leave conditions within a trigger time length.

27. The method according to claim 21, further comprising:
sending, by the network side device, second configuration information to the terminal, the second configuration information comprising layer 1 measurement configuration information, the layer 1 measurement configuration information comprising measurement configuration information of N candidate cells, and the second configuration information being used for performing, by the terminal, layer 1 measurement on the candidate cells.

28. The method according to claim 21, further comprising:
sending, by the network side device, first information to the terminal, the first information comprising at least one of the following:
number-of-handovers indication information, used for indicating that the terminal performs RRC reestablishment or the terminal is not allowed to perform a conditional handover in a case that a number of handover failures reaches a first preset value indicated by the number-of-handovers indication information;
a first timer, used for indicating that the terminal performs RRC reestablishment or the terminal is not allowed to perform a conditional handover in a case that the first timer expires; and
duration indication information, used for indicating that the terminal performs RRC reestablishment or the terminal is not allowed to perform a conditional handover in a case that a duration indicated by the duration indication information expires.

29. A cell handover apparatus, comprising:
a first handover module, configured to perform, in a case that a layer 1 measurement result of a first target cell satisfies a first handover condition, a first handover to the first target cell, the first target cell being a candidate cell.

30. A cell handover configuration apparatus, comprising:
a first sending module, configured to send first configuration information to a terminal, the first configuration information comprising layer 1 conditional reconfiguration information, the layer 1 conditional reconfiguration information being used for determining, by the terminal, a first target cell from candidate cells, and the first target cell being a target cell having a layer 1 measurement result satisfying a first handover condition.

31. A terminal, comprising a processor and a memory, the memory storing programs or instructions executable on the processor, wherein the programs or instructions, when executed by the processor, implement the steps of the cell handover method according to any one of claims 1 to 20.

32. A network side device, comprising a processor and a memory, the memory storing programs or instructions executable on the processor, wherein the programs or instructions, when executed by the processor, implement the steps of the cell handover configuration method according to any one of claims 21 to 28.

33. A readable storage medium, the readable storage medium having programs or instructions stored thereon, wherein the programs or instructions, when executed by a processor, implement the cell handover method according to any one of claims 1 to 20 or implement the steps of the cell handover configuration method according to any one of claims 21 to 28.
